Europäisches Patentamt

European Patent Office

Office européen des brevets

(19)

(11) Veröffentlichungsnummer: **0 381 658**

**A2**

(12) **EUROPÄISCHE PATENTANMELDUNG**

(21) Anmeldenummer: **90890008.7**

(22) Anmeldetag: **10.01.90**

(51) Int. Cl.5 **G01B 11/02, G01D 5/36**

(30) Priorität: **03.02.89 AT 219/89**

(43) Veröffentlichungstag der Anmeldung:
**08.08.90 Patentblatt 90/32**

(84) Benannte Vertragsstaaten:
**BE CH DE FR GB IT LI LU NL SE**

(71) Anmelder: **RSF-Elektronik Gesellschaft m.b.H.**

**A-5121 Tarsdorf 93(AT)**

(72) Erfinder: **Rieder, Heinz**
**Maria Bühelstrasse 23**
**A-5110 Oberndorf(AT)**
Erfinder: **Schwaiger, Max**
**Weilhartstrasse 13**
**A-5121 Ostermiething(AT)**

(74) Vertreter: **Hübscher, Heiner, Dipl.-Ing. et al**
**Spittelwiese 7**
**A-4020 Linz(AT)**

(54) **Inkrementales Messsystem.**

(57) Bei dem inkrementalen Längenmeßsystem sind ein Maßstab (1) mit einer Meßteilung (3) und einer zugeordneten Abtasteinheit (2) mit Abtastelementen zur Erzeugung von analogen Meßsignalen sowie eine Auswertungseinheit (9) zur Erzeugung von digitalen Zählsignalen aus den analogen Meßsignalen vorgesehen. Für die Erzeugung eines Referenzimpulses werden Bezugsmarken (12, 13) paarweise mit Längsabstand voneinander auf einem am Maßstab (1) befestigbaren Träger (11) vorgesehen. Zugeordnete Abtastelemente (10) sind mit der Auswertungseinheit (8, 9, 15) verbunden. Ein Bezugspunkt (R) ist zwischen den Bezugsmarken (12, 13) wählbar und wird durch seine Abstände ($Z_1$, $Z_2$) von diesen Bezugsmarken (12, 13) definiert. Diese Abstände ($Z_1$, $Z_2$) werden in Speichern (16) festgehalten, so daß die Auswertungseinheit (8, 9, 15) verstellrichtungsabhängig nach Überfahren einer Bezugsmarke (12 bzw. 13) mit der Abtasteinheit (10) in Richtung auf den gewählten Bezugspunkt (R) zu nach Zurücklegung des dem zugeordneten Speicherwert entsprechenden, aus der Abtastung der Meßteilung (3) ermittelten Weges den über eine eigene Impulsformerstufe (16) erzeugten Referenzimpuls auslöst.

EP 0 381 658 A2

## Inkrementales Meßsystem

Die Erfindung betrifft ein inkrementales Meßsystem nach dem Oberbegriff des Patentanspruches 1.

Aus der DE-A-34 45 694 ist ein inkrementales Meßsystem bekannt, dessen Maßstabverkörperung über die Abtasteinheit berührungslos nach optoelektronischen Abtastprinzipien abtastbar ist. Es sind aber auch Meßsysteme mit induktiv, magnetisch oder kapazitiv abtastbaren Maßstabverkörperungen und entsprechenden Bezugsmarken bekannt. Bei der Abtastung der Maßstabverkörperung werden als Meßsignale periodische, z. B. sinusförmige Analogsignale erhalten, bei denen ein vollständiger Signalzug einem vollständigen Meßteilungsinkrement zugeordnet ist, das bei optoelektronischer Abtastung aus je einem Hell- und einem Dunkelfeld der Meßteilung bestehen kann. Es werden wenigstens zwei um 90° phasenverschobene Meßsignale erzeugt, bei denen das eine dem anderen verstellrichtungsabhängig voreilt, so daß daraus die Verstellrichtung festgestellt werden kann. Bei der Verarbeitung der analogen Meßsignale zu digitalen Zählsignalen ist eine elektronische oder rechnerische Unterteilung des Maßstabes z. B. unter Einsatz von Mikrocomputern möglich. Die digitalen Zählsignale können als Steuersignale für eine Maschine, für Roboter und zur Darstellung der Meßergebnisse auf Anzeigeeinheiten verwendet werden. Zur Herstellung einer eindeutigen Beziehung zwischen den Zählsignalen und der jeweils abgetasteten Maßstabstelle ist es notwendig, die Zähleinrichtung an vorgegebenen oder vorwählbaren Maßstabstellen auf bestimmte Werte, beispielsweise Null, zu setzen. Dafür werden die Referenzimpulse verwendet. Es können auch an verschiedenen Längsbereichen des Maßstabes, aber der Meßteilung eindeutig zugeordnet mit Hilfe von Bezugsmarken Referenzimpulse erzeugt werden, wobei zu definieren ist, welcher Bezugspunkt eben angefahren wird, um die Steuerung auf die jeweilige Maßstabstelle beziehen zu können. Es ist bekannt, aufwendige Steuer- und Schaltsysteme zur Unterscheidung zwischen ausgewählten und nicht ausgewählten Bezugspunkten vorzusehen. Für genaue Messungen werden die Bezugspunkte durch am Maßstab gemeinsam mit der Meßteilung, aber in einer eigenen Spur angebrachte Referenzmarken definiert, bei deren Anbringung für eine exakte Ausrichtung zu den Maßstabinkrementen Sorge zu tragen ist. Diese Referenzmarken erzeugen bei der Atbastung durch ein entsprechendes Gitter einer eigenen Abtasteinheit unmittelbar Referenzimpulse, die flanken- und phasenrichtig mit den Meß- bzw. Zählsignalen auftreten sollen. Man kann mehrere Referenzmarken am Maßstab anbringen, von denen eine oder einige für die tatsächliche Steuerung ausgewählt werden. Diese Auswahl ist durch Abdeckung oder Entfernung nicht ausgewählter Referenzmarken möglich, was bei den meist gekapselten Meßsystemen aufwendig ist, nur von geschultem Fachpersonal vorgenommen werden darf und wobei eine neuerliche Anbringung entfernter Referenzmarken nicht vorgenommen werden kann. An Auswahlsystemen sind aus der DE-A-18 14 785 mechanische Ein-Ausschalter bekannt, die bei der Verstellung der Abtasteinheit über eigens vorgesehene Anschläge betätigt werden und die Auswertungsschaltung nur an ausgewählten Referenzmarken aktivieren. Diese mechanischen Schalter sind bei einer Konstruktion nach der DE-B-25 40 412 durch an vorwählbaren Maßstabstellen anbringbare Magnete zur Betätigung von als Reed-Relais ausgebildeten Auswahlschaltern in der Abtasteinheit ersetzt. Es ist auch bekannt, die Referenzmarken in mehreren Referenzspuren vorzusehen, jeder Spur eine Abtasteinheit zuzuordnen und eine Referenzmarke durch Auswahl der Abtasteinheit der zugeordneten Spur für die Abgabe von Referenzsignalen zu bestimmen. Dies setzt schon einen aufwendigen Aufbau des Maßstabes und der Abtasteinheiten sowie schwierige Einstellarbeiten bei der Aktivierung des Meßsystemes voraus. Bevorzugt werden Ausbildungen, bei denen die Referenzmarken, aus denen auszuwählen ist, in einer einzigen Spur vorliegen. Zur Kennzeichnung einer ausgewählten Referenzmarke werden nach der EP-A-0 239 768 die Referenzmarken in gleicher Teilung angebracht und die einer ausgewählten Referenzmarke benachbarte Referenzmarke wird entfernt. Unter Verwendung einer doppelten Abtasteinrichtung mit im Teilungsabstand der Referenzmarken angebrachten Abtastelementen, die in Gegenschaltung verbunden sind, so daß sich von vorhandenen Referenzmarken erzeugte Signale gegenseitig aufheben, wird erreicht, daß an der ausgewählten Referenzmarke, bei deren Abtastung wegen der Entfernung der benachbarten Referenzmarke das sonst von dieser erzeugte Signal fehlt, ein auswertbares Referenzsignal erzeugt wird. Spätere Änderungen in der Auswahl der Referenzmarken sind hier praktisch ausgeschlossen.

Aus der EP-A-0 172 323 ist es bekannt, Referenzmarkenpaare in sich periodisch ändernder Teilung anzubringen, so daß eine Längencodierung entsteht, aus der jene Referenzmarkenhälfte definiert werden kann, deren Referenzimpuls ausgewertet wird.

Aus der DD-A-58 394 ist es bekannt, an einem Maßstab Codiermarken in Längsrichtung verschiebbar und feststellbar anzubringen, wobei durch Abtastung einer solchen Codiermarke Steuerbefehle ausgelöst werden können. Es ist unmöglich, eine Codiermarke so genau gegenüber der Meßteilung auszurichten, daß die erzeugten Steuersignale so wie die von ortsfesten Referenzmarken erzeugten Referenzimpulse phasen-und flankenrichtig mit einem durch Abtastung der Meßteilung erhaltenen analogen Meßsignal bzw. einem entsprechenden aus diesem Analogsignal abgeleiteten digitalen Zählsignal zusammenfallen, wodurch sich auch abhängig von der Anfahrrichtung Meß- bzw. Steuerfehler ergeben können.

Aufgabe der Erfindung ist die Schaffung eines Meßsystems der eingangs genannten Art, bei dem mit geringem Anlagen- und Schaltungsaufwand und dabei hoher Sicherheit ein oder mehrere Bezugspunkte bestimmt, entsprechende Referenzsignale in phasen- bzw. flankenrichtiger Zuordnung zum Meß- bzw. Zählsignal erzeugt werden können und im Bedarfsfall auch eine Veränderung der Lage des oder der Bezugpunkte ohne wesentlichen Aufwand ermöglicht wird.

Die gestellte Aufgabe wird durch die Merkmale des Patentanspruches 1 gelöst.

Der Maßstab wird vereinfacht, da nur die Meßteilung angebracht werden muß. Die Bezugsmarken können ähnlich oder gleich wie die bekannten Referenzmarken ausgebildet sein, es ist aber auch möglich, ihnen eine einfachere Form zu geben, da es nur darauf ankommt, beim Überfahren der Marke an einer genau definierten Stelle ein Bereitstellungsignal für die weitere Auswertung auszulösen. Der eigentliche Bezugspunkt wird durch seine Abstände von den Bezugsmarken definiert und an sich durch ein Zählsignal bestimmt, so daß der Referenzimpuls in phasen- bzw. flankenrichtiger Zuordnung zu den dem Referenzpunkt zugeordneten Maßstabinkrement bzw. dem von diesem erzeugten Meßsignal oder Zählsignal ausgelöst werden kann. Selbst wenn der Träger mit nicht exakt gegenüber der Meßteilung hinsichtlich des Längsrichtungsverlaufes ausgerichteten Bezugsmarken montiert wird, läßt sich der Abstand des Bezugspunktes von den Bezugsmarken genau definieren. Durch Verwendung einer eigenen Impulsformerstufe zur Erzeugung des Referenzimpulses kann die Signalform bzw. der Signalverlauf dieses Impulses an die Bedürfnisse der mit ihm beaufschlagten Meß- oder Steuereinrichtung angepaßt werden, ist also völlig unabhängig von der Signalform der bei der Abtastung der Bezugsmarken in den Abtastelementen auftretenden Signale. Es ist dabei möglich, die Impulsformerstufe mit einem die Impulsform des Referenzimpulses bestimmenden Speicher zu versehen. Änderungen in der Lage eines Bezugspunktes zum Maßstab sind durch Verstellung des Trägers in Maßstablängsrichtung durchführbar. Der Träger kann am Maßstab festgeklebt, festgeschraubt oder mit einer eigenen Abstützeinrichtung festgehalten werden. Nach einer anderen Möglichkeit bildet der Träger eine den Maßstab im Randbereich umgreifende Klammer, die durch den über Dichtlippen abgedichteten Schlitz eines den Maßstab und die Abtasteinheit aufnehmenden Rohrgehäuses mit Hilfe geeigneter Werkzeuge eingesetzt und im Bedarfsfall verstellt werden kann. Für die Erstanbringung kann man eine sich am Maßstab festhaltende Klammer zunächst mit einem Betätigungsschwert für die Abtasteinheit kuppeln, mit dem Schwert verschieben und diese Kupplung beim Erreichen der für den Bezugspunkt ausgewählten Stelle des Maßstabes lösen.

Man kann am Träger identische Bezugsmarken vorsehen, deren Signale gleichbleiben, ob sie von rechts oder von links überfahren werden. Um zu verhindern, daß bei der Erstaktivierung des Meßsystems und bei über dem Träger befindlicher Abtasteinheit ein falscher Referenzimpuls im Speicherabstand links von der linken bzw. rechts von der rechten Bezugsmarke (und nicht zwischen den Bezugsmarken) erzeugt wird, sind Schutzmaßnahmen vorgesehen. Im einfachsten Fall erzeugt die Abtasteinheit für die Bezugsmarken, solange sie sich zwischen den Bezugsmarken befindet und den Träger abtastet, ein Signal, das sich von jenem unterscheidet, das bei der Abtastung des freien Maßstabbereiches auftritt. Man kann auch vorsehen, daß ein Referenzimpuls erst nach Überfahren einer Bezugsmarke und einer Richtungsumkehr berücksichtigt werden darf, bis zu der wenigstens ein dem Bezugsmarkenabstand entsprechender Weg zurückgelegt wurde. Schließlich kann man auch am Maßstabträger oder am Schutzgehäuse außen Marken anbringen, die den Anbringungsort des Plättchens bezeichnen und die Abtasteinheit beim Start des Systems auf einen ausserhalb dieses Anbringungsbereiches befindlichen Ort ein stellt. Man kann auch sich in der Signalerzeugungscharakteristik unterscheidende Bezugsmarken vorsehen und hier die Auslösung des Referenzimpulses davon abhängig machen, daß vorher die eine Bezugsmarke in Richtung auf die andere Bezugsmarke zu überfahren und der im Speicher festgehaltene Weg in dieser Richtung zurückgelegt wird. Diese Möglichkeit bietet sich dadurch an, daß die Bezugsmarken nicht für die Erzeugung identischer Signale ausgelegt werden müssen.

Eine Möglichkeit der Auswahl zwischen den durch an mehreren Trägern angebrachten Bezugsmarkenpaaren definierten Bezugspunkten ist in Anspruch 4 angegeben.

Weitere Einzelheiten und Vorteile des Erfindungsgegenstandes entnimmt man der nachfolgenden Zeichnungsbeschreibung.

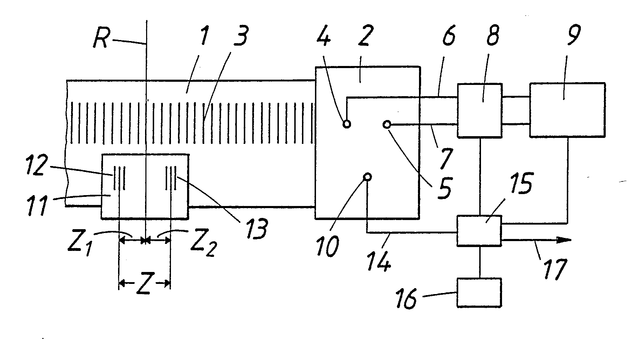

In der Zeichnung ist als Ausführungsbeispiel in schematischer Darstellungweise ein Teilstück eines Maßstabes mit nach optoelektronischen Abtastprinzipien abtastbarer Meßteilung, einem aufgesetzten Bezugsmarkenträger und einer zugehörigen Abtasteinheit in Ansicht dargestellt, wobei auch die wesentlichen Teile der Auswertungseinheit im Blockschema veranschaulicht wurden.

Ein z. B. aus einem Glaskörper bestehender Maßstabkörper 1 kann gemeinsam mit einer entlang des Maßstabes verstellbaren Abtasteinheit 2 in einem nicht dargestellten rohrförmigen Schutzgehäuse untergebracht sein, wobei die Abtasteinheit 2 mit Hilfe eines durch Dichtlippen hindurch in einen Schlitz des Rohrgehäuses eingeführten Schwertes verstellt werden kann, das z. B. auf einer Werkzeugmaschine die Verbindung mit einem Werkzeugschlitten herstellt.

Am Maßstabkörper ist eine nach optoelektronischen Abtastprinzipien abtastbare Maßstabverkörperung 3 angebracht. Für diese Maßstabverkörperung können in der Abtasteinheit vier Abtasteinheiten vorgesehen sein, die aus je einem Abtastgitter und einem photoelektrischen Empfänger bestehen. Die Abtastgitter sind gegeneinander um Teilungsbruchteile der Maßstabverkörperung versetzt und die zugehörigen Empfänger sind paarweise in Gegenschaltung verbunden, so daß an zwei Anschlüssen 4, 5 bei der Abtastung der Meßteilung gegeneinander um 90° phasenverschobene, in der Grundform sinusförmige analoge Meßsignale auftreten, die über Leitungen 6, 7 einer Richtungserkennungsstufe 8 und einer Auswertungsstufe 9 zugeführt werden. Für die erwähnten photoelektrischen Empfänger und einen noch zu beschreibenden photoelektrischen Empfänger 10 können je gesonderte Beleuchtungseinrichtungen (etwa Photodioden) oder auch eine gemeinsame, über eine Optik die Meßteilung 3 und die dem Empfänger 10 zugeordnete Maßstabspur beleuchtende Beleuchtungseinrichtung vorgesehen werden. Es ist eine Abtastung im Auflicht-, Durchlicht- oder bei dann vorzugsweise verspiegelter Maßstabrückseite im Reflexionslichtverfahren möglich.

Die Auswertungseinheit 9 erhält die Meßsignale und ein die Verstellrichtung der Abtasteinheit 2 angebendes Signal vom Richtungsdiskriminator 8. Bei der Auswertung können Vervielfacherschaltungen, z. B. Potentiometerschaltungen, zur elektronischen Unterteilung des Maßstabes vorgesehen werden oder man setzt - bei dann gegebenenfalls gepulster Beleuchtungseinrichtung für die photoelektrischen Empfänger an den Abtastgittern - Vervielfacherschaltungen mit Phasenverschiebungserkennung ein. Eine bevorzugte Möglichkeit besteht in der Kombination von Zählschaltungen für die in digitale Zählsignale umgewandelten Meßsignale und einem Rechner zur rechnerischen Interpolationsberechnung. Besonders bei Verwendung eines Rechners können für die beiden Zählrichtungen (rechts und links bzw. "up" und "down") frei laufende Zähler verwendet werden, die vom Rechner periodisch abgefragt werden, wobei der Steuerbzw. Anzeigenullpunkt, der durch einen Referenzimpuls definierbar ist, durch Abspeicherung des momentanen Zählerstandes am Nullpunkt definiert und die momentane Stellung der Abtasteinheit gegenüber diesem definierten Nullpunkt aus den aktuellen Zählerständen und den erwähnten Speicherwerten berechnet wird. Das Meßergebnis wird auf einer Anzeige angezeigt und/oder für Maschinen- und Robotersteuerungen verwendet.

Soweit die Schaltung bisher beschrieben wurde, ist sie bekannter Stand der Technik. Nach der Erfindung wird für die Erzeugung eines bzw. jedes benötigten Referenzimpulses (der aber nicht bei jedem Überfahren der betreffenden Maßstabstelle ausgenützt werden muß und meist nur nach gesonderter Schalterbetätigung bzw. für die Eichung am Beginn einer Messung oder eines Arbeitstages aktiviert wird) ein am Maßstabkörper 1 befestigbares, z. B. als Federklammer ausgebildetes, Plättchen 11 verwendet, das zwei über die Einheit 10 und zwischengeschaltete Gitter od. dgl. abtastbare Bezugsmarken 12, 13 trägt. Das Plättchen kann auch an eigenen Halterungen an den Maßstab andrückbar befestigt oder auf den Maßstab aufgeklebt werden. Beim Überfahren erzeugt jede der beiden Abtastmarken 12 bzw. 13 im zugehörigen photoelektrischen Empfänger 10 ein Signal, von dem eine charakteristische Stelle, beispielsweise eine Flanke, genau diskriminierbar ist. Diese Signale werden über eine Leitung 14 einer Auswertungsstufe 15 zugeführt, die gesondert dargestellt ist, aber ebenso wie der Richtungsdiskriminator 8 Bestandteil der Auswertungseinheit 9 sein kann. Dies gilt auch für die im Zusammenhang mit der Auswertungsstufe 15 zu erwähnen den Speicher 16. Die Auswertungsstufe 15 ist mit der Auswertungseinheit 9 verbunden (oder deren Bestandteil) und erhält vom Richtungsdiskriminator 8 die Verstellrichtung kennzeichnende Signale und von der Einheit 9 Zählsignale.

Ein Bezugspunkt R wird durch seinen Abstand von den Bezugsmarken 12, 13 definiert.

Die Bezugsmarken 12, 13 befinden sich voneinander in einem Abstand Z. Der Abstand des Bezugspunktes R von der linken Marke 12 wird mit $Z_1$ und der Abstand von der rechten Marke 13 mit $Z_2$ bezeichnet. Bei aktivierter Auswertungsschaltung für den Referenzimpuls wird beim Überfahren der Marke 12 nach rechts die Auswertungsstufe 15 aktiviert, so daß sie nun von der Auswertungseinheit verstellrichtungsabhängig Zählimpulse erhält bzw. Zählimpulse auswertet. In dem Speicher 16 sind den Abständen $Z_1$ und $Z_2$ entsprechende Speicherwerte festgehalten. Dabei können die Speicher $Z_1$ und $Z_2$ auch aus Zählschaltungen bestehen, die beim Auftreten des Bezugssignales an 12 oder 13 verstellrichtungsabhängig auf den Wert $Z_1$ bzw. $Z_2$ gesetzt und durch weitere Zählimpulse im Sinne eines Herunterzählens gesteuert werden. Da Zählimpulse Verwendung finden, die aus dem Hauptmeßsystem abgeleitet werden, sind diese Impulse flanken- bzw. phasenrichtung zum analogen Meßsignal bzw. digitalen Zählsignal. Sobald der Speicherwert $Z_1$ bei Aktivierung durch die Marke 12 bzw. der Speicherwert $Z_2$ (bei Aktivierung durch die Marke 13) erreicht ist, gibt die Auswertungsstufe 15 über eine Leitung 17 einen Referenzimpuls ab. Die Abgabe des Referenzimpulses erfolgt immer an der genau definierten Stelle R. Die an den Marken 12, 13 erzeugten Signale können so ausgewertet werden, daß sie nur zur Bereitstellung der Einrichtung 15 dienen, die in bereitem Zustand durch die Zählsignale weitergesteuert wird. Die Abstände $Z_1$ und $Z_2$ werden daher auch durch ganze Zählschritte definiert.

Für die Festlegung der Lage des Bezugspunktes R gelten folgende Bedingungen:
$Z = Z_1 + Z_2$ und
$Z_1 \pm n = Z_2$, wobei n Null oder eine ganze Zahl sein kann. In den meisten Fällgen wird man n möglichst klein oder mit Null wählen. Der Abstand Z kann im Bedarfsfall sehr klein gehalten werden. Er ist notwendig, um den Bezugspunkt genau definieren zu können und um zu gewährleisten, daß die Abtasteinheit 10 beim Überfahren getrennte Signale aus 12 und 13 empfängt. Möglichkeiten der Richtungsbestimmung durch verschiedene Ausbildung der beiden Bezugsmarken, durch Erzeugung eines Grundpegels an 10 bei über dem Plättchen 11 befindlicher Abtasteinheit und Erstaktivierung des Referenzimpulses bzw. Einschaltung des Systems wurden in der vorhergehenden allgemeinen Beschreibung erwähnt.

Zumindest theoretisch ist es möglich, am Träger 11 nur eine Bezugsmarke 12 vorzusehen oder auf der Abtasteinheit 2 für die Bezugsmarken 12, 13 zwei Abtasteinheiten 10 im Abstand Z anzubringen, wobei im letzteren Fall die Referenzimpulsauswertung nur erfolgt, wenn gleichzeitig ein Signal aus beiden Abtasteinheiten auftritt. Wenn dabei R phasen- bzw. flankenrichtig dem Meß- oder Zählsignal zuzuordnen ist, also der Referenzimpuls erst von dem auf das aus der bzw. den Bezugsmarken abgeleitete Signal folgenden Zählschritt oder einen der folgenden Zählschritte ausgelöst wird, erhält man zwei definierte Bezugspunkt R, je nach der Verstellrichtung der Abtasteinheit 2. Der Abstand dieser Bezugspunkte kann dadurch berücksichtigt werden, daß in der einen Verstellrichtung der erhaltene Referenzimpuls in herkömmlicher Weise ausgenützt und in der anderen Verstellrichtung der Hauptzähler 9 beim Auftreten des Referenzimpulses an dem zweiten Bezugspunkt auf einen um den Abstand der beiden Bezugspunkte korrigierten Wert gesetzt wird.

## Ansprüche

1. Inkrementales Meßsystem, insbesondere Längenmeßsystem, mit einem Maßstab (1), auf dem eine eine berührungslos abtastbare Maßstabverkörperung darstellende Meßteilung vorgesehen ist, einer Abtasteinheit (2) mit Abtastelementen (4, 5) zur Erzeugung von analogen Meßsignalen aus der Abtastung der Meßteilung (3) und einer Auswertungseinheit (9) zur Erzeugung von digitalen Zählsignalen aus diesen Meßsignalen, wobei in Zuordnung zur Meßteilung (3) Bezugsmarken (12, 12) vorgesehen sind, für die in der Abtasteinheit (2) Abtastelemente (10) und eine Auswertungsschaltung (15) vorgesehen sind, die abhängig von dem bei der Abtastung der Bezugsmarken (12, 13) auftretenden Signalen einer durch ihren Abstand von einer Bezugsmarke definierten Maßstabstelle zugeordnet Referenzimpulse erzeugt, dadurch gekennzeichnet, daß die Bezugsmarken (12, 13) paarweise mit Längsabständen voneinander auf einem am Maßstab (1) an wählbarer Stelle befestigbaren Träger (11) angebracht sind, daß ein Bezugspunkt (R) zwischen diesen Bezugsmarken (12, 13) wählbar und durch seine Abstände ($Z_1$, $Z_2$) von den beiden Bezugsmarken definierbar ist und daß diese Abstände ($Z_1$, $Z_2$) in Speichern (16) festgehalten werden, so daß die Auswertungseinheit (15) verstellrichtungsabhängig nach Überfahren einer der beiden Bezugsmarken (12, 13) mit der Abtasteinheit (2) in Richtung auf den gewählten Bezugspunkt (R) zu nach Zurücklegung des dem zugeordneten Speicherwert entsprechenden, aus der Abtastung der Meßteilung (3) ermittelten Weges den über eine eigene Impulsformerstufe (16) erzeugten Referenzimpuls auslöst.

2. Meßsystem nach Anspruch 1, dadurch gekennzeichnet, daß die Auswertungseinheit (8, 9, 15) in phasen- bzw. flankenrichtiger Zuordnung zu dem an dem dem Bezugspunkt (R) zugeordneten Maßstabinkrement erzeugten analogen Meßsignal bzw. dem aus diesem abgeleiteten digitalen Zählsignal auslöst.

3. Meßsystem nach Anspruch 1 oder 2, dadurch gekennzeichnet, daß die Impulsformerstufe (15, 16) einen die Impulsform des Referenzimpulses bestimmenden Speicher (16) aufweist.

4. Meßsystem nach einem der Ansprüche 1 bis 3, dadurch gekennzeichnet, daß bei Verwendung mehrerer Bezugspunkte die einzelnen Bezugspunkte durch sich voneinander in der Signalerzeugungscharakteristik unterscheidende Bezugsmarkenpaare an den zugeordneten, am Maßstab befestigbaren Trägern, die in der Abtasteinheit unterschiedliche Signale erzeugen, gekennzeichnet sind.

EP 0 381 658 A2